# FASCICULE DE BREVET EUROPEEN

(11) **EP 1 809 516 B1**
(45) Date de publication et mention de la délivrance du brevet: **09.04.2008**
(21) Numéro de dépôt: 05805813.2
(22) Date de dépôt: 16.09.2005
(51) Int. Cl.: B60R 21/01

(54) **PARE-CHOCS DE VEHICULE AUTOMOBILE DU TYPE MUNI D'UN DISPOSITIF D'EVALUATION D'EFFORT**
KRAFTFAHRZEUGSTOSSFÄNGER JENER ART, DIE MIT EINER BELASTUNGSBEWERTUNGSVORRICHTUNG AUSGESTATTET IST
MOTOR VEHICLE BUMPER OF THE TYPE EQUIPPED WITH A STRESS ASSESSMENT DEVICE

(30) Priorité: 22.09.2004 FR 0410005
(43) Date de publication de la demande: 25.07.2007
(73) Titulaire: Compagnie Plastic Omnium, 69007 Lyon (FR)
(72) Inventeur: ROUX, Jean-Pierre, F-69480 Pommiers (FR); ROUSSEL, Thierry, F-52500 Fayl la Foret (FR)
(74) Mandataire: Remy, Vincent Noel Paul
(86) Numéro de dépôt international: PCT/FR2005/002300
(87) Numéro de publication internationale: WO 2006/032767

(56) Documents cités:
- DE-A1- 10 039 755
- DE-U1-4202004 005 43

## Description

La présente invention concerne un pare-chocs de véhicule automobile du type muni d'un dispositif d'évaluation d'effort.

Afin d'assurer la sécurité d'un piéton lors d'un choc, certains véhicules automobiles comportent des dispositifs de protection destinés à limiter les dommages corporels subis par ce piéton.

En particulier, il existe des dispositifs de protection passifs, tels que des poutres basses ou des absorbeurs d'énergie pour les chocs tête, et des dispositifs de protection actifs, tels que des ballons gonflants externes ou des organes de levage de capot.

Les dispositifs de protection actifs sont généralement commandés à l'aide d'un dispositif d'évaluation d'effort présent dans le pare-chocs du véhicule automobile, dispositif qui permet de déterminer si le choc correspond à un choc avec un piéton, auquel cas les dispositifs de protection actifs sont déclenchés.

On connaît déjà, dans l'état de la technique, un pare-chocs de véhicule automobile, du type muni d'un dispositif d'évaluation d'effort comportant un capteur d'effort agencé dans le pare-chocs, le pare-chocs comportant une peau de pare-chocs, une traverse située à une distance de la peau et un absorbeur d'énergie déformable agencé entre la peau et la traverse.

Lors d'un choc avec un piéton, la jambe de ce piéton doit subir une décélération suffisamment faible pour limiter les dommages qu'elle subit. A cet effet, l'absorbeur d'énergie est généralement dimensionné pour se déformer, en se compressant, pendant toute la durée du choc, afin de dissiper l'énergie du choc et de limiter l'effort transmis.

L'absorbeur d'énergie est donc dimensionné pour absorber une grande partie de l'énergie provenant de chocs contre la jambe d'un piéton, dits « chocs piéton », ou de chocs à faible vitesse, dits « chocs parking » (entre 4 et 8 km/h).

Lors d'un choc plus important, dit « choc de sévérité moyenne », l'absorbeur d'énergie est généralement compressé jusqu'à un maximum de compressibilité. Au delà de ce maximum, l'énergie du choc n'est plus absorbée et l'effort correspondant au choc est directement transmis à la traverse en passant par le capteur d'effort.

Mais le capteur d'effort n'est pas adapté pour subir des efforts trop grands, de sorte qu'il est généralement endommagé lors d'un tel choc.

L'invention a pour objet un pare-chocs de véhicule automobile, du type muni d'un dispositif d'évaluation d'effort comportant un capteur d'effort agencé dans le pare-chocs, le pare-chocs comportant une peau de pare-chocs, une traverse située à une distance de la peau et un absorbeur d'énergie déformable agencé entre la peau et la traverse. Un tel pare-chocs est décrit dans le document DE 20 2004 003 434 U. Dans le but d'éviter la destruction du pare-chocs en cas de choc violent, l'invention propose que le pare-chocs comporte des moyens de transmission d'effort destinés à faire passer l'effort directement de la peau à la traverse, de manière que l'effort passant par le capteur n'augmente plus, lorsque la distance entre la peau et la traverse devient inférieure à un seuil prédéterminé.

La distance entre la peau et la traverse étant liée à la compression subie par l'absorbeur, le seuil prédéterminé est choisi de telle manière que l'effort passant par le capteur cesse d'augmenter avant que l'absorbeur ait atteint son maximum de compressibilité.

Ainsi, l'effort correspondant au choc est directement transmis à la traverse en passant par les moyens de transmission d'effort plutôt que par le capteur.

Le capteur ne subit alors pas d'effort trop grand et n'est donc pas détruit lors d'un choc de sévérité moyenne.

Un pare-chocs selon l'invention peut en outre comporter l'une ou plusieurs des caractéristiques suivantes :
- la traverse comporte une gorge dans laquelle est logé le capteur d'effort ;
- le capteur est agencé sur la peau de pare-chocs ;
- les moyens de transmission d'effort comportent au moins une entretoise rigide agencée entre la peau et la traverse ;
- l'entretoise rigide est agencée sur la traverse ;
- le capteur d'effort est muni d'une gaine de protection, cette gaine comportant une excroissance formant l'entretoise rigide ;
- l'absorbeur est conformé pour s'étendre, lors d'un choc, sur une zone perpendiculaire à la direction du choc, de manière que la zone étendue forme une butée pour l'entretoise, l'effort passant directement de la peau à la traverse par cette butée ;
- l'absorbeur est conformé pour présenter une surface d'appui pour l'entretoise ;
- la peau de pare-chocs est munie d'au moins une zone renforcée destinée à présenter une surface d'appui pour l'entretoise.

L'invention sera mieux comprise à la lecture de la description qui va suivre, donnée uniquement à titre d'exemple et faite en se référant aux dessins annexés dans lesquels :
- les figures 1 et 2 sont des vues schématiques en coupe d'un pare-chocs de véhicule automobile selon un premier mode de réalisation de l'invention, respectivement avant et après un choc de sévérité moyenne ;
- les figures 3 et 4 sont des vues similaires aux figures 1 et 2 d'un pare-chocs selon un deuxième mode de réalisation de l'invention ;
- les figures 5 et 6 sont des vues similaires aux figures 1 et 2 d'un pare-chocs selon un troisième mode de réalisation de l'invention.

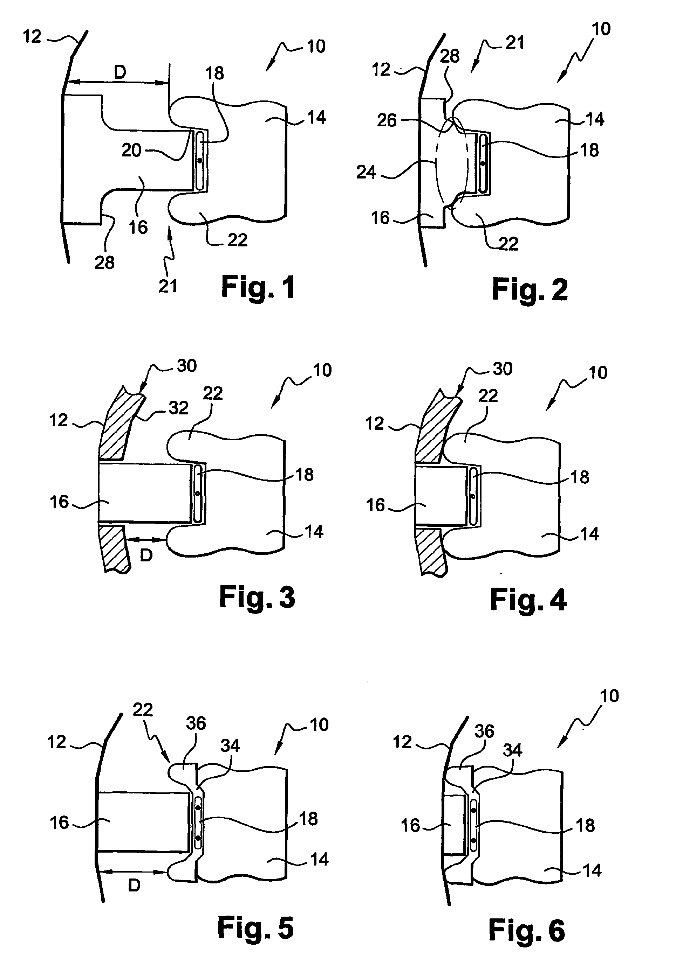

On a représenté sur les figures 1 et 2 un pare-chocs de véhicule automobile, désigné par la référence générale 10.

Ce pare-chocs 10 comporte une peau de pare-chocs 12 et une traverse 14, généralement métallique, située à une distance D de la peau 12.

Le pare-chocs 10 comporte en outre un absorbeur d'énergie 16 déformable, agencé entre la peau 12 et la traverse 14. En général, la distance D entre la peau 12 et la traverse 14 est liée à la déformation de l'absorbeur 16.

Le véhicule automobile est muni d'un dispositif d'évaluation d'effort, comportant notamment un capteur d'effort 18 agencé dans le pare-chocs 10.

Dans l'exemple représenté, la traverse 14 comporte une gorge 20 dans laquelle est logé le capteur d'effort 18. Toutefois, le capteur d'effort 18 pourrait être, en variante, agencé sur la peau de pare-chocs 12.

Le capteur 18 coopère avec l'absorbeur 16 de manière que, en cas de choc, l'effort correspondant au choc passe de la peau 12 à la traverse 14 par l'absorbeur 16 et par le capteur 18.

Lors de chocs à basse vitesse (entre 4 et 8 km/h) ou lors de chocs avec un piéton, l'absorbeur 16 se déforme en dissipant une partie de l'énergie du choc. Ainsi, l'effort subi par le capteur d'effort 18 n'est pas nuisible pour ce capteur 18.

Afin de protéger le capteur d'effort 18 en cas de chocs plus importants, le pare-chocs 10 comporte des moyens 21 de transmission d'effort destinés à faire passer l'effort directement de la peau 12 à la traverse 14 de manière que l'effort passant par le capteur 18 n'augmente plus lorsque la distance D entre la peau 12 et la traverse 14 devient inférieure à un seuil prédéterminé.

A cet effet, les moyens de transmission d'effort 21 comportent des entretoises rigides 22 agencées entre la peau 12 et la traverse 14. Sur l'exemple de la figure 1, les entretoises 22 sont agencées sur la traverse 14, et prolongent les parois de la gorge 20 dans laquelle est logé le capteur 18.

La figure 2 représente le pare-chocs 10 lorsque la distance D entre la peau 12 et la traverse 14 devient inférieure au seuil prédéterminé. Dans cet exemple, l'absorbeur 16 est conformé pour s'étendre, lors du choc, sur une zone 24 perpendiculaire à la direction du choc. Cette zone étendue 24 forme une butée 26 pour les entretoises 22 de la traverse 14. Ainsi, l'effort correspondant au choc passe directement de la peau 12 à la traverse 14 par cette butée 26 et par les entretoises 22. L'effort ne passe donc pas par le capteur 18, qui est ainsi protégé de la destruction.

On notera que l'absorbeur 16 est aussi conformé pour présenter une surface d'appui 28 pour l'entretoise 22, pouvant compléter ou remplacer la butée 26.

Sur les figures 3 à 6, les éléments analogues à ceux des figures précédentes sont désignés par des références identiques.

Sur les figures 3 et 4, la peau de pare-chocs 12 est munie de zones renforcées 30 destinées à présenter une surface d'appui 32 pour les entretoises 22.

Dans ce mode de réalisation, l'absorbeur 16 est conformé pour se déformer uniquement en compression.

Ainsi, lorsque la distance D entre la peau et la traverse 14 devient inférieure au seuil prédéterminé, les entretoises 22 viennent en butée contre la surface d'appui 32 et l'effort passe alors directement de la peau 12 à la traverse 14, sans passer par le capteur 18.

Dans le mode de réalisation décrit sur les figures 5 et 6, le capteur 18 est muni d'une gaine 34 de protection. Cette gaine s'étend autour du capteur 18 et comporte des excroissances 36 formant les entretoises rigides 22. Ces excroissances 36 viennent en butée contre la peau de pare-chocs 12 lorsque la distance D devient inférieure au seuil prédéterminé (voir figure 6).

On notera que l'invention n'est pas limitée au mode de réalisation précédemment décrit. En effet, il est possible de combiner diverses caractéristiques des différents modes de réalisation décrits sans sortir du cadre de l'invention.

## Revendications

1. Pare-chocs (10) de véhicule automobile du type muni d'un dispositif d'évaluation d'effort comportant un capteur d'effort (18) agencé dans le pare-chocs (10), le pare-chocs (10) comportant une peau de pare-chocs (12), une traverse (14) située à une distance (D) de la peau (12) et un absorbeur d'énergie (16) déformable agencé entre la peau (12) et la traverse (14), **caractérisé en ce que** le pare-chocs (10) comporte des moyens (21) de transmission d'effort destinés à faire passer l'effort directement de la peau (12) à la traverse (14), de manière que l'effort passant par le capteur (18) n'augmente plus, lorsque la distance (D) entre la peau (12) et la traverse (14) devient inférieure à un seuil prédéterminé.

2. Pare-chocs (10) selon la revendication 1, dans lequel la traverse (14) comporte une gorge (20) dans laquelle est logé le capteur d'effort (18).

3. Pare-chocs (10) selon la revendication 1, dans lequel le capteur d'effort (18) est agencé sur la peau de pare-chocs (12).

4. Pare-chocs (10) selon l'une quelconque des revendications 1 à 3, dans lequel les moyens de transmission d'effort (21) comportent au moins une entretoise rigide (22) agencée entre la peau (12) et la traverse (14).

5. Pare-chocs (10) selon la revendication 4, dans lequel l'entretoise rigide (22) est agencée sur la traverse (14).

6. Pare-chocs (10) selon la revendication 4, dans lequel le capteur d'effort (18) est muni d'une gaine de protection (34), cette gaine (34) comportant une excroissance (36) formant l'entretoise rigide (22).

7. Pare-chocs (10) selon l'une quelconque des revendications 4 à 6, dans lequel l'absorbeur (16) est conformé pour s'étendre, lors d'un choc, sur une zone (24) perpendiculaire à la direction du choc, de manière que la zone étendue (24) forme une butée (26) pour l'entretoise (22), l'effort passant directement de la peau (12) à la traverse (14) par cette butée (26).

8. Pare-chocs (10) selon l'une quelconque des revendications 4 à 7, dans lequel l'absorbeur (16) est conformé pour présenter une surface d'appui (28) pour l'entretoise (22).

9. Pare-chocs (10) selon l'une quelconque des revendications 4 à 6, dans lequel la peau de pare-chocs (12) est munie d'au moins une zone renforcée (30) destinée à présenter une surface d'appui (32) pour l'entretoise (22).

## Claims

1. A motor vehicle bumper (10) of the type provided with a force evaluation device comprising a force sensor (18) arranged in the bumper (10), the bumper (10) comprising a bumper skin (12), a crossbar (14) situated at a distance (D) from the skin (12), and a deformable energy absorber (16) arranged between the skin (12) and the crossbar (14), the bumper (10) being **characterized in that** it includes force transmission means (21) designed to pass force directly from the skin (12) to the crossbar (14) in such a manner that the force passing via the sensor (18) no longer increases once the distance (D) between the skin (12) and the crossbar (14) becomes less than a predetermined threshold.

2. A bumper (10) according to claim 1, wherein the crossbar (14) includes a groove (20) in which the force sensor (18) is housed.

3. A bumper (10) according to claim 1, wherein the force sensor (18) is arranged on the bumper skin (12).

4. A bumper (10) according to any one of claims 1 to 3, wherein the force transmission means (21) comprise at least one rigid spacer (22) arranged between the skin (12) and the crossbar (14).

5. A bumper (10) according to claim 4, wherein the rigid spacer (22) is arranged on the crossbar (14).

6. A bumper (10) according to claim 4, wherein the force sensor (18) is provided with a protective sheath (34), the sheath (34) including a projection (36) forming the rigid spacer (22).

7. A bumper (10) according to any one of claims 4 to 6, wherein the absorber (16) is shaped to extend, in the event of an impact, over a zone (24) perpendicular to the impact direction, in such a manner that the extended zone (24) forms an abutment (26) for the spacer (22), the force passing directly from the skin (12) to the crossbar (14) via the abutment (26).

8. A bumper (10) according to any one of claims 4 to 7, wherein the absorber (16) is shaped to present a bearing surface (28) for the spacer (22).

9. A bumper (10) according to any one of claims 4 to 6, wherein the bumper skin (12) is provided with at least one reinforced zone (30) for presenting a bearing surface (32) to the spacer (22).

## Patentansprüche

1. Stoßfänger (10) eines Kraftfahrzeugs jener Art, die mit einer Belastungsbewertungsvorrichtung ausgestattet ist, umfassend einen im Stoßfänger (10) angeordneten Belastungssensor (18), wobei der Stoßfänger (10) eine Stoßfängerhaut (12), einen in einem Abstand (D) zur Haut (12) angeordneten Querträger (14) und einen zwischen der Haut (12) und dem Querträger (14) angeordneten verformbaren Energieabsorber (16) umfasst, **dadurch gekennzeichnet, dass** der Stoßfänger (10) Mittel (21) zur Belastungsübertragung umfasst, dazu bestimmt die Belastung direkt von der Haut (12) auf den Querträger (14) zu übertragen, so dass die den Sensor (18) passierende Belastung nicht mehr zunimmt, wenn der Abstand (D) zwischen der Haut (12) und dem Querträger (14) eine definierte Schwelle unterschreitet.

2. Stoßfänger (10) nach Anspruch 1, wobei der Querträger (14) eine Nut (20) umfasst, in welcher der Belastungssensor (18) angeordnet ist.

3. Stoßfänger (10) nach Anspruch 1, wobei der Belastungssensor (18) auf der Stoßfängerhaut (12) angeordnet ist.

4. Stoßfänger (10) nach einem der Ansprüche 1 bis 3, wobei die Mittel zur Belastungsübertragung (21) wenigstens eine zwischen der Haut (12) und dem Querträger (14) angeordnete starre Distanz (22) umfassen.

5. Stoßfänger (10) nach Anspruch 4, wobei die starre Distanz (22) auf dem Querträger (14) angeordnet ist.

6. Stoßfänger (10) nach Anspruch 4, wobei der Belastungssensor (18) mit einer Schutzhülle (34) ausgestattet ist, wobei diese Hülle (34) eine die starre Distanz (22) bildende Ausbauchung (36) umfasst.

7. Stoßfänger (10) nach einem der Ansprüche 4 bis 6, wobei der Absorber (16) so gestaltet ist, dass er sich bei einem Aufprall in einer Zone (24) senkrecht zur Aufprallrichtung ausdehnt, so dass die ausgedehnte Zone (24) einen Anschlag (26) für die Distanz (22) bildet, wobei die Belastung direkt über diesen Anschlag (26) von der Haut (12) auf den Querträger (14) übergeht.

8. Stoßfänger (10) nach einem der Ansprüche 4 bis 7, wobei der Absorber (16) so gestaltet ist, dass er eine Auflagefläche (28) für die Distanz (22) bietet.

9. Stoßfänger (10) nach einem der Ansprüche 4 bis 6, wobei die Stoßfängerhaut (12) wenigstens eine verstärkte Zone (30) aufweist, die eine Auflagefläche (32) für die Distanz (22) bieten soll.
